# EUROPÄISCHE PATENTANMELDUNG

(11) **EP 4 656 457 A1**
(43) Veröffentlichungstag der Anmeldung: **03.12.2025**
(21) Anmeldenummer: 25177013.7
(22) Anmeldetag: 16.05.2025
(51) Int. Cl.: B60P 3/34, B60P 3/39

(54) **WOHNMOBIL ODER WOHNWAGEN**

(30) Priorität: 28.05.2024 DE 102024114899
(71) Anmelder: auriga explorer GmbH, 21258 Heidenau (DE)
(72) Erfinder: Haltermann, Frank, 21258 Heidenau (DE)
(74) Vertreter: Holz, Christian

(57) **Zusammenfassung**

Die vorliegende Erfindung betrifft ein Wohnmobil (1, 2) oder einen Wohnwagen mit einer Wohnkabine (2) mit einer zum Wohnen ausgebildeten Inneneinrichtung, wobei die Wohnkabine (2) wenigstens ein Element aufweist, welches ausgebildet ist, im Standbetrieb des Wohnmobils (1, 2) oder Wohnwagens ausgefahren zu sein, um den Innenraum der Wohnkabine (2) zu vergrößern, und im Fahrbetrieb des Wohnmobils (1, 2) oder Wohnwagens eingefahren zu sein, um die Abmaße der Wohnkabine (2) zu verringern.

## Beschreibung

Die vorliegende Erfindung betrifft ein Wohnmobil oder einen Wohnwagen.

Heutzutage sind Wohnmobile als eine mobile Möglichkeit weit verbreitet, um die Freizeit und den Urlaub zu verbringen. Unter einem Wohnmobil wird dabei ein Kraftfahrzeug verstanden, welches, vergleichbar einem Wohnwagen, ausgestattet ist bzw. eine Inneneinrichtung aufweist, welche zum Wohnen geeignet ist. Hierzu gehören Möglichkeiten zum Kochen, zum Schlafen für wenigstens zwei Personen sowie zum Waschen bzw. eine Toilette. Je nach Größe und Ausstattung können auch diese Möglichkeiten möglichst einer Wohnung bzw. einem Haus vergleichbar sowie für mehr als zwei Personen nutzbar sein. Wohnmobile können auch als Reisemobile bezeichnet werden. Wohnmobile stellen eine eigene Fahrzeugart dar.

Üblicherweise wird als Fahrzeugbasis eines Wohnmobils ein Kleintransporter bzw. dessen Fahrgestell verwendet, welche selbst ein zulässiges Gesamtgewicht bis zu 3,5 t aufweisen und somit in Deutschland mit der Führerschein-Klasse B gefahren werden dürfen. Wird jedoch die Fahrzeugbasis eines Kleintransporters als Grundlage eines Wohnmobils verwendet, so erreichen Wohnmobile üblicherweise ein zulässiges Gesamtgewicht von über 3,5 t und erfordern somit eine höhere Führerschein-Klasse des Fahrers. Im Bereich des zulässigen Gesamtgewichts von 3,5 t bis 7,5 t ist die Führerschein-Klasse 3 bzw. C1 des Fahrers in Deutschland erforderlich, darüber sogar die Führerschein-Klasse C des Fahrers. Lediglich Wohnmobile, welche ein zulässiges Gesamtgewicht von bis zu 3,5 t einhalten, dürfen in Deutschland mit der Führerschein-Klasse B gefahren werden, vergleichbar einem Personenkraftwagen (Pkw), sonst sind Führerscheinklassen erforderlich, wie sie Lastkraftwagen (Lkw) entsprechen, wie bereits erwähnt.

Nachteilig ist somit hinsichtlich der Führung bzw. des Fahrens von Wohnmobilen, dass mit der für Pkw ausreichenden Führerschein-Klasse B lediglich vergleichsweise leichte und damit auch kleine, enge und unkomfortabel ausgestattete Wohnmobile gefahren werden dürfen, was zu entsprechenden Einschränkungen bei der Nutzung führt. Möchten die Personen als Benutzer eines Wohnmobil mehr Raum und mehr Komfort, so ist zumindest in Deutschland eine höhere Führerschein-Klasse erforderlich.

Nachteilig ist bei der Überschreitung des zulässigen Gesamtgewichts von 3,5 t auch, dass dies die Nutzungsmöglichkeiten des Wohnmobils einschränken kann, da Durchfahrtsverbote für derartige Fahrzeuge für Pässe, Brücken sowie Innenstädte bestehen können. Auch können für derartige Fahrzeuge höhere Mautgebühren, höhere Gebühren für Fähren und Bußgelder erhoben werden. Ferner sind von Fahrzeugen mit einem zulässigen Gesamtgewicht von mehr als 3,5 t die Überholverbote und Mindestabstände von Lkws einzuhalten.

Nachteilig ist bei der Verwendung der Fahrzeugbasis eines Kleintransporter bzw. dessen Fahrgestells als Grundlage für Wohnmobile auch, dass Kleintransporter üblicherweise für den Stadtverkehr ausgelegt sind. Dies führt entsprechend dazu, dass auch ein hierauf basierendes Wohnmobil feste Straßen zum Fahren erfordert und somit die Nutzung des Wohnmobils auf unbefestigten Straßen, Feldwegen sowie im Gelände nur eingeschränkt oder gar nicht möglich ist. Dies führt zu entsprechenden Einschränkungen bei der Nutzung des Wohnmobils, insbesondere wenn die Benutzung in der Natur bzw. in der Wildnis gewünscht ist.

Wohnmobile sind üblicherweise auch vergleichsweise hoch ausgebildet, um den Personen die voll Stehhöhe im Inneren zu ermöglichen. Dies führt jedoch nachteiliger Weise dazu, dass aufgrund der Höhe der Wohnmobile ihre Nutzung ebenfalls eingeschränkt ist, d.h. die zulässige Höhe zum Unterqueren von Brücken und dergleichen zu beachten ist. Auch scheidet üblicherweise die Benutzung von Parkhäusern für Wohnmobile aus.

Nachteilig ist hinsichtlich der vergleichsweise großen Höhe von Wohnmobilen ferner, dass Wohnmobile beim Fahren einen vergleichsweise großen Strömungswiderstand aufweisen, was die Geschwindigkeit begrenzt und den Kraftstoffverbrauch erhöht.

Nachteilig ist hinsichtlich der vergleichsweise großen Höhe von Wohnmobilen des Weiteren, dass Wohnmobile bei Sturm keine freistehenden Brücken befahren sollten, um vom Wind nicht erfasst und umgekippt zu werden. Unabhängig hiervon führt die vergleichsweise große Höhe von Wohnmobilen insgesamt zu einer deutlich höheren Anfälligkeit zu wanken, als dies bei anderen Fahrzeugen der Fall ist.

Wohnmobile weisen ferner aus den zuvor genannten Gründen eine vergleichsweise große Länge auf, welche häufig die Grenze von 6 m überschreitet. Dies ist dahingehend nachteilig, da Parkplätze üblicherweise eine Länge im Bereich von 4,80 m bis 5.50 m aufweisen, so dass sie von Wohnmobilen mit einer Länge von über 6 m nicht verwendet werden können. Auch kann das Überschreiten der Grenze von 6 m Länge zu zusätzlichen Kosten bei der Benutzung führen, da Fähren und Campingstellplätze für Wohnmobile ab 6 m Länge üblicherweise erhöhte Preise verlangen.

Vergleichbare Überlegungen und Nachteile gelten auch für Wohnwagen, d.h. für Anhänger für Kraftfahrzeuge, welche ebenfalls mit einer Wohnungseinrichtung ausgestattet sind. Wohnmobile und Wohnwagen, auch Caravan oder Campingwagen genannt, unterscheiden sich im Wesentlichen dadurch, dass ein Wohnmobil einen eigenen Antrieb besitzt bzw. mittels des eigenen Antriebs selbst bewegt werden kann, wohingegen es einem Wohnwagen an einem derartigen Antrieb fehlt, weshalb ein Wohnwagen von einem anderen Fahrzeug geschleppt bzw. gezogen werden muss, um bewegt zu werden.

Eine Aufgabe der vorliegenden Erfindung ist es, ein Wohnmobil oder einen Wohnwagen der eingangs beschriebenen Art bereit zu stellen, so dass bei vergleichsweise geringem zulässigen Gesamtgewicht, vergleichsweise geringer Länge, vergleichsweise geringer Breite und bzw. oder vergleichsweise geringer Höhe ein möglichst großer Komfort bzw. möglichst umfangreiche Nutzungsmöglichkeiten für die Personen geboten werden können. Insbesondere soll ein möglichst komfortables geländegängiges Wohnmobil mit weniger als 3,5 t zulässigem Gesamtgewicht bei einer Länge von weniger als 6 m geschaffen werden. In jedem Fall soll dies vorzugsweise möglichst einfach, kostengünstig, kompakt, intuitiv nutzbar und bzw. oder langlebig umgesetzt werden. Zumindest soll eine Alternative zu den bekannten Wohnmobilen bzw. Wohnwagen geschaffen werden.

Die Aufgabe wird erfindungsgemäß durch ein Wohnmobil oder durch einen Wohnwagen mit den Merkmalen des Patentanspruchs 1 gelöst. Vorteilhafte Weiterbildungen sind in den Unteransprüchen beschrieben.

Somit betrifft die vorliegende Erfindung ein Wohnmobil oder einen Wohnwagen mit einer Wohnkabine mit einer zum Wohnen ausgebildeten Inneneinrichtung. Die Wohnkabine stellt den Teil des Wohnmobils bzw. des Wohnwagens dar, welcher auf einem Fahrgestell angeordnet ist und einen Innenraum zumindest im Wesentlichen umschließt. Im Innenraum als Wohnraum ist eine Inneneinrichtung angeordnet, wie sie bei Wohnmobilen bzw. Wohnwagen verwendet wird, um Personen die Nutzung des Wohnmobils bzw. des Wohnwagens im Sinne von Wohnen, d.h. Schlafen, Waschen bzw. Duschen, Essen, Kochen, Sitzen und dergleichen, zu ermöglichen.

Die Wohnkabine weist wenigstens ein Element auf, welches ausgebildet ist, im Standbetrieb des Wohnmobils oder Wohnwagens ausgefahren zu sein, um den Innenraum der Wohnkabine zu vergrößern, und im Fahrbetrieb des Wohnmobils oder Wohnwagens eingefahren zu sein, um die Abmaße der Wohnkabine zu verringern.

Unter einem Standbetrieb ist dabei derjenige Zustand des Wohnmobils bzw. des Wohnwagens zu verstehen, in welchem das Wohnmobil bzw. der Wohnwagen steht, um zum Wohnen genutzt zu werden, ohne dass eine Bewegung bzw. ein Fahren des Wohnmobils bzw. Wohnwagens erfolgt bzw. erfolgen kann. Hierzu kann der Wohnwagen von einem Zugfahrzeug abgekoppelt und mittels einer Bremse, ggfs. auch mit Keilen an den Rädern, sicher in Position gehalten zu werden. Bei einem Wohnmobil kann im Standbetrieb der Motor ausgeschaltet sowie die Feststellbremse angezogen sein. Auch können im Standbetrieb jeweils Versorgungsanschlüsse wie für elektrischen Strom, Frischwasser und Abwasser an das Wohnmobil bzw. an den Wohnwagen angeschlossen sein.

Im Gegensatz zum Standbetrieb kann im Fahrbetrieb das Wohnmobil bzw. der Wohnwagen in der Lage sein, im Straßenverkehr und dergleichen bewegt zu werden bzw. zu fahren. Somit kann der Wohnwagen von Personen verlassen und an ein Zugfahrzeug angehängt sein. Das Wohnmobil kann betriebsbereit zum Fahren sein oder der Motor kann laufen. Jeweils sind im Fahrbetrieb keinerlei Verbindungen zu Versorgungsanschlüssen vorhanden.

Der vorliegenden Erfindung liegt die Erkenntnis zugrunde, dass die eingangs beschriebenen Nachteile von Wohnmobilen und teilweise auch von Wohnwagen dadurch zumindest teilweise überwunden oder zumindest reduziert werden können, indem mittels wenigstens eines ein-/ausfahrbaren Elements das Volumen des Innenraums der Wohnkabine an den Betriebszustand des Wohnmobils bzw. des Wohnwagens angepasst werden kann. Dies kann im Standbetrieb die Nutzungsmöglichkeiten und den Komfort für die Personen als Benutzer erhöhen. Gleichzeitig können die Außenmaße im Fahrbetrieb geringgehalten werden. Dies kann auch das Gewicht des Wohnmobils bzw. des Wohnwagens geringhalten. Das Ein- und Ausfahren kann jeweils mittels eines Antriebs vorzugsweise elektrisch, pneumatisch oder hydraulisch erfolgen, so dass vorzugsweise ein, insbesondere ohnehin vorhandener, Kompressor zusätzlich hierfür genutzt werden kann.

Gemäß einem Aspekt der Erfindung ist ein ein-/ausfahrbares Element der Wohnkabine ein Aufstelldach, welches ausgebildet ist, mittels eines Hubmechanismus im Standbetrieb gegenüber einer Außenwand der Wohnkabine entlang der vertikalen Achse angehoben zu sein, um den Innenraum der Wohnkabine zu vergrößern, und im Fahrbetrieb gegenüber der Außenwand der Wohnkabine entlang der vertikalen Achse abgesenkt zu sein, um die Höhe der Wohnkabine zu verringern.

Somit kann erfindungsgemäß im Standbetrieb eine Vergrößerung des Volumen des Innenraums der Wohnkabine in der Höhe, d.h. entlang der vertikalen Achse, erfolgen, um insbesondere das aufrechte Stehen für die Personen als Benutzer zu ermöglichen. Dies kann den Komfort der Benutzer besonders verbessern. Durch die Reduzierung der Höhe des Wohnmobils bzw. des Wohnwagens im Fahrbetrieb kann ein Wanken reduziert werden. Auch kann der Strömungswiderstand hierdurch reduziert werden. Ferner kann die seitliche Angriffsfläche für Wind reduziert werden.

Der Hubmechanismus kann jegliche hierfür geeignete angetriebene Kinematik sein. Insbesondere können Scherenkinematiken sowie lineare Hubmechanismen verwendet werden, wobei letzteres nachfolgend als bevorzugter Hubmechanismus näher beschrieben werden wird.

Gemäß einem weiteren Aspekt der Erfindung weist der Hubmechanismus wenigstens einen Linearantrieb auf, wobei ein Stator des Linearantriebs feststehend an der Wohnkabine angeordnet und ausgebildet ist, einen Abtrieb des Linearantriebs translatorisch entlang der vertikalen Achse zu bewegen, wobei der Abtrieb dem Stator abgewandt entlang der Längsachse beweglich mit einer Linearführung des Hubmechanismus verbunden ist, wobei die Linearführung des Hubmechanismus feststehend an dem Aufstelldach angeordnet ist.

Mit anderen Worten kann der Linearantrieb einen Abtrieb wie insbesondere einen Kolben linear entlang der vertikalen Achse translatorisch hoch und runter bewegen, wobei der Abtrieb dabei vom Stator des Linearantriebs aufgenommen, gehalten und bewegt wird. Als Antriebsprinzip kann insbesondere ein elektrischer Motor oder ein pneumatischer oder hydraulischer Druckzylinder verwendet werden, um vorzugsweise eine elektrische Versorgung bzw. eine Luftdruckerzeugung bzw. einen Hydraulikdruck des Wohnmobils bzw. des Wohnwagens auch für diesen Zweck nutzen zu können. In jedem Fall kann das Aufstelldach eine entlang der Längsachse verlaufende Linearführung aufweisen, welche das Ende des Abtriebs, welches dem Stator abgewandt ist und somit aus dem Stator herausragt, translatorisch beweglich aufnimmt.

Somit kann zum Anheben des Aufstelldachs der Abtrieb entlang der vertikalen Achse nach oben aus dem Stator heraus verfahren bzw. gedrückt werden. Dabei kann das mit der Linearführung des Aufstelldachs verbundene Ende des Abtriebs gegenüber dem Aufstelldach entlang der Linearführung bewegt werden. Hierdurch kann die rein translatorische Bewegung des Abtriebs des Linearantriebs entlang der vertikalen Achse eine Bewegung des Aufstelldachs bewirken, bei welcher das Aufstelldach sowohl entlang der vertikalen Achse angehoben als auch entlang der Längsachse bewegt bzw. verschoben wird. Dies kann ein Anheben des Aufstelldachse mittels eines Hubmechanismus ermöglichen, wenn das Aufstelldach gleichzeitig schwenkbar mit der Außenwand der Wohnkabine verbunden ist, so dass eine rein translatorische Bewegung des Aufstelldach nicht möglich ist, wie nachfolgend näher beschrieben werden wird.

Dabei vorzugsweise ein entlang der Querachse zueinander beabstandetes Paar von Linearantrieben zu verwenden, kann seitlich wirkende mechanische Momente, welche zu einem Verkanten der Elemente des Hubmechanismus führen könnten, verhindern. Auch kann dies für eine gleichmäßigere Bewegung sorgen. Ferner können die Linearantriebe schwächer und damit kleiner bzw. kompakter ausgebildet werden, was die Breite des Wohnmobils des Wohnwagens geringhalten kann.

Dabei vorzugsweise den Stator des Linearantriebs in eine Seitenwand der Wohnkabine zu integrieren, kann wenigstens des Stator des Linearantriebs vor den Personen optisch verbergen und somit die optische Gestaltung verbessern.

Gemäß einem weiteren Aspekt der Erfindung ist zwischen der Außenwand und dem Aufstelldach eine Stoffabdeckung angeordnet, welche ausgebildet ist, im Standbetrieb des Wohnmobils oder Wohnwagens entlang der vertikalen Achse gespannt zu sein, um einen Zwischenraum zwischen der Außenwand und dem Aufstelldach der Wohnkabine flächig glatt zu verschließen, und im Fahrbetrieb des Wohnmobils oder Wohnwagens in den Innenraum der Wohnkabine hineinzuragen, um den Zwischenraum zwischen der Außenwand und dem Aufstelldach der Wohnkabine freizugeben.

Diesem Aspekt der Erfindung liegt die Erkenntnis zugrunde, dass bei Verwendung eines ein-/ausfahrbaren Aufstelldachs eine Lücke zwischen der oberen Kante der Außenwand und der unteren Kante des Aufstelldachs entsteht, wodurch die Wohnkabine undicht wird, d.h. Wind, Regen, Luft und dergleichen in das Innere der Wohnkabine eindringen sowie Luft aus dem Inneren der Wohnkabine nach außen entweichen kann. Daher wird erfindungsgemäß dieser Zwischenraum zwischen Außenwand und dem Aufstelldach der Wohnkabine dauerhaft durch eine Stoffabdeckung, vergleichbar dem Material eines klappbaren Dachs eines Cabrios, verschlossen, so dass auch bei angehobenem Aufstelldach das Innere der Wohnkabine nach außen hin witterungsfest umschlossen bleibt. Die Lücke zwischen der starren Außenwand und dem starren Aufstelldach wird somit stets bzw. dauerhaft von einer Stoffabdeckung aus einem flexiblen sowie wind- und wasserdichtem Material verschlossen, so dass der Innenraum sowohl im Fahrbetrieb als auch im Standbetrieb ebenso wie in den Bewegungen des Aufstelldachs zwischen Fahr- und Standbetrieb wetterfest nach außen hin umschlossen ist.

Hierzu können die Ränder bzw. die Kanten der Stoffabdeckung zum einen mit der oberen Kante bzw. mit dem oberen Rand der Außenwand und zum anderen mit der unteren Kante bzw. mit dem unteren Rand des Aufstelldachs fest verbunden sein. Die Stoffabdeckung kann gleichzeitig ausreichend flexibel sein, um sich beim Absenken des Aufstelldachs zusammenfalten zu lassen. Durch geeignete Führungsmittels vergleichbar den klappbaren Dächern von Cabrios kann dabei sichergestellt werden, dass sich die Stoffabdeckung in das Innere der Wohnkabine bewegt und somit die obere Kante der Außenwand und die untere Kante des Aufstelldachs aufeinander aufliegen können, wenn das Aufstelldach vollständig eingefahren bzw. abgesenkt ist.

Die Stoffabdeckung dabei vorzugsweise mit wenigstens einem Fensterelement zu versehen, kann es ermöglichen, dass die Personen als Benutzer aus dem Inneren durch das Fensterelement nach außen schauen sowie Sonnenlicht in das Innere der Wohnkabine gelangen kann, wenn das Aufstelldach ausgefahren ist, was die Helligkeit im Inneren erhöhen und das Ambiente verbessern kann. Hierzu können flexible transparente Folien oder auch feste transparente Scheiben, vorzugsweise aus Kunststoff, wie bei den klappbaren Dächern von Cabrios verwendet werden.

Gemäß einem weiteren Aspekt der Erfindung weist das Wohnmobil oder der Wohnwagen ferner eine Mehrzahl von Wandteilen auf, welche ausgebildet sind, im Standbetrieb des Wohnmobils oder Wohnwagens von Innen im Zwischenraum der Außenwand und des Aufstelldachs flächig angeordnet zu sein, und im Fahrbetrieb des Wohnmobils oder Wohnwagens in den Innenraum der Wohnkabine entfernt zu sein, um den Zwischenraum zwischen Außenwand und dem Aufstelldach der Wohnkabine freizugeben.

Durch derartige Wandelemente kann eine zusätzliche Verstärkung der gespannten Stoffabdeckung von Innen erfolgen. Dies kann die Stabilität des Verschlusses des Zwischenraums zwischen Außenwand und dem Aufstelldach der Wohnkabine erhöhen. Auch können die Wandelemente, beispielsweise als expandierte Polystyrol-Elemente oder als extrudierte Polystyrol-Elemente, auch thermisch isolierend ausgebildet sein, so dass die Wärmedämmung der Stoffabdeckung durch die zusätzlich Verwendung der Wandelemente verbessert werden kann. In jedem Fall können die Wandelemente auch die Geräuschisolierung verbessern.

Die Wandelemente können als separate Elemente, sozusagen lose, vorgesehen sein, um von den Personen als Benutzer von Hand bewegt bzw. getragen und in den Zwischenraum zwischen Außenwand und dem Aufstelldach der Wohnkabine von Innen gegen die Stoffabdeckung eingesetzt zu werden. Dies kann die Flexibilität der Gestaltung des Innenraums der Wohnkabine erhöhen, da die Wandelemente bei Nicht-Gebrauch beliebig gelagert werden können.

Die Wandelemente vorzugsweise als Klappwände vorzusehen, welche entweder an der oberen Kante der Außenwand oder an der unteren Kante des Aufstelldachs schwenkbar bzw. klappbar angeordnet sind, kann das Anordnen der Wandelemente von Innen gegen die Stoffabdeckung in den Zwischenraum zwischen Außenwand und dem Aufstelldach der Wohnkabine für die Personen als Benutzer erleichtern und beschleunigen. Insbesondere kann es die Personen davon entlasten, die losen Wandelemente der richtigen Position im Zwischenraum zwischen Außenwand und dem Aufstelldach der Wohnkabine zuzuordnen.

Dabei vorzugsweise die Wandelemente mit wenigstens einer Fensteraussparung korrespondierend zu einem Fensterelement der Stoffabdeckung zu versehen, kann verhindern, dass ein Fensterelement der Stoffabdeckung von einem Wandelement verdeckt werden kann.

Gemäß einem weiteren Aspekt der Erfindung weist das Aufstelldach wenigstens auf: ein erstes Dachelement, welches mittels wenigstens eines Schwenkelement entlang der Querachse mit der Außenwand schwenkbar verbunden ist, und ein zweites Dachelement, welches mittels wenigstens eines Schwenkelement entlang der Querachse mit dem ersten Dachelement schwenkbar verbunden ist.

Auf diese Art und Weise kann ein Aufstelldach realisiert werden, welches aufgrund der beiden Schwenkelemente, welche jeweils entlang der Querachse verlaufen, vergleichsweise stabil mit der Außenwand verbunden und dennoch gegenüber der Außenwand schwenkbar beweglich ist. Dies kann ein Ein-/Ausfahren des Aufstelldachs gegenüber der Außenwand ermöglichen, beispielsweise mittels des zuvor beschriebenen Hubmechanismus, welcher aufgrund der translatorischen Beweglichkeit des Abtriebs des Linearantriebs entlang der Längsachse die translatorische Beweglichkeit des zweiten Dachelements ermöglichen kann. Mit anderen Worten kann auf diese Art und Weise das erste Dachelement, welches das zweite Dachelement und die Außenwand jeweils schwenkbar miteinander verbindet, zusätzlich zur Funktion als Bestandteil des Aufstelldachs ferner als Kinematik wirken bzw. genutzt werden.

In jedem Fall kann bei ausgefahrenem Aufstelldach das zweite Dachelement horizontal ausgerichtet sein, so dass überall die gewünschte Höhe, insbesondere die Stehhöhe für die Personen als Benutzer, erreicht und gleichzeitig die Höhe der Wohnkabine im Fahrbetrieb geringgehalten werden kann.

Die Stabilität der Verbindung von Außenwand zum ersten Dachelement und bzw. oder von erstem Dachelement zum zweiten Dachelement kann durch die Verwendung entsprechend stabiler bzw. länglicher Schwenkmittel wie insbesondere durch Scharniere, vorzugsweise durch ein Filmscharnier und bzw. oder durch ein Stangenscharnier, weiter verbessert werden.

In jedem Fall kann das erste Dachelement an einer vorderen Kante der Außenwand, d.h. der Vorderseite des Wohnmobils bzw. des Wohnwagens in Fahrtrichtung zugewandt, oder an einer hinteren Kante der Außenwand, d.h. der Vorderseite des Wohnmobils bzw. des Wohnwagens in Fahrtrichtung abgewandt, angeordnet sein. Dies kann den Gestaltungsspielraum erhöhen.

Dabei vorzugsweise ein Dachelement bzw. beide Dachelemente mit wenigstens einem Fensterelement zu versehen, kann den Personen als Benutzer, insbesondere im Liegen, den Blick nach außen ermöglichen. Ebenso kann dann auch von oben Licht in den Innenraum der Wohnkabine gelangen, was die Helligkeit im Inneren erhöhen und das Ambiente verbessern kann.

Dabei vorzugsweise auf einem Dachelement bzw. auf beiden Dachelementen Solarzellen vorzusehen, kann die Nutzung der Dachfläche zur Erzeugung von elektrischer Energie ermöglichen. Dabei zumindest auf dem zweiten Dachelement aufstellbare Solarzellen vorzugsehen, kann den Wirkungsgrad der Solarzellen aufgrund der Ausrichtung zur Sonne verbessern. Gleichzeitig können die aufgestellten Solarzellen die Sonneneinstrahlung vom zweiten Dachelement fernhalten, was eine Erwärmung des Innenraums der Wohnkabine vergleichbar einem Sahara-Dach reduzieren kann.

Gemäß einem weiteren Aspekt der Erfindung ist ein ein-/ausfahrbares Element der Wohnkabine wenigstens ein Seitenelement, welches ausgebildet ist, im Standbetrieb durch eine korrespondierende Seitenöffnung einer Außenwand der Wohnkabine gegenüber der Außenwand der Wohnkabine entlang der Querachse ausgefahren zu sein, um den Innenraum der Wohnkabine zu vergrößern und bzw. oder den Zugriff auf einen Stauraum des Seitenelements zu ermöglichen, und im Fahrbetrieb durch die korrespondierende Seitenöffnung der Außenwand der Wohnkabine gegenüber der Außenwand der Wohnkabine entlang der Querachse eingefahren zu sein, um die Breite der Wohnkabine zu verringern.

Auch dies kann eine Möglichkeit darstellen, im Standbetrieb das nutzbare Volumen des Innenraums der Wohnkabine entlang der Querachse zu vergrößern, und gleichzeitig im Fahrbetrieb die seitlichen Maße des Wohnmobils bzw. des Wohnwagens geringzuhalten. Dabei kann das Innenvolumen des Seitenelements, welches auch als Slide-Out bezeichnet werden kann, als Stauraum für Gegenstände wie beispielsweise Geschirr, Kochutensilien, Vorräte und dergleichen genutzt werden, auf welche von Innen zugegriffen werden kann. Auch kann das Seitenelement einen Stauraum aufweisen, auf welchem lediglich bei ausgefahrenem Seitenelement von außen zugegriffen werden kann. Alternativ kann das Innenvolumen des Seitenelements leer bleiben und nach innen offen sein, um beim Schlafen die Füße einer Person aufzunehmen, was den Komfort des Schlafens durch die längere Liegefläche verbessern kann.

Vorzugsweise auch ein Seitenelement mit Solarzellen zu versehen, kann auch die Erzeugung elektrischer Energie an diese Stelle ermöglichen.

Gemäß einem weiteren Aspekt der Erfindung ist ein ein-/ausfahrbares Element der Wohnkabine wenigstens ein Heckelement, welches ausgebildet ist, im Standbetrieb durch eine korrespondierende Hecköffnung einer Außenwand der Wohnkabine gegenüber der Außenwand der Wohnkabine entlang der Längsachse ausgefahren zu sein, um den Innenraum der Wohnkabine zu vergrößern und bzw. oder den Zugriff auf einen Stauraum des Heckelements zu ermöglichen, und im Fahrbetrieb durch die korrespondierende Hecköffnung der Außenwand der Wohnkabine gegenüber der Außenwand der Wohnkabine entlang der Längsachse eingefahren zu sein, um die Länge der Wohnkabine zu verringern.

Auf diese Art und Weise können die zuvor hinsichtlich des Seitenelements beschriebenen Eigenschaften und Vorteile auch mittels eines Heckelements umgesetzt und genutzt werden, wie zuvor beschrieben.

Vorzugsweise auch ein Heckelement mit Solarzellen zu versehen, kann auch die Erzeugung elektrischer Energie an diese Stelle ermöglichen.

Gemäß einem weiteren Aspekt der Erfindung weist das Wohnmobil oder der Wohnwagen wenigstens ein Küchenelement und wenigstens eine erste Matratze auf, welche ausgebildet ist, im Standbetrieb des Wohnmobils oder Wohnwagens entlang der vertikalen Achse oberhalb des Küchenelements angeordnet zu sein, um das Küchenelement freizugeben, oder auf dem Küchenelement abgelegt zu sein, um genutzt zu werden, und im Fahrbetrieb des Wohnmobils oder Wohnwagens auf dem Küchenelement abgelegt zu sein, um die Höhe der Wohnkabine zu verringern.

Somit kann der Bereich oberhalb des Küchenelements bzw. einer Küchenzeile auch zum Schlafen genutzt werden, wenn das Küchenelement nicht genutzt wird. Dies kann die Nutzungsmöglichkeiten der Wohnkabine weiter erhöhen bzw. den hierfür erforderlichen Raum weiter reduzieren. Auch das Anheben und Absenken der Matratze kann mittels eines Antriebs elektrisch, pneumatisch oder hydraulisch, vorzugsweise pneumatisch, erfolgen.

Gemäß einem weiteren Aspekt der Erfindung weist das Wohnmobil oder der Wohnwagen wenigstens ein Sitzelement auf, welches ausgebildet ist, im Standbetrieb des Wohnmobils oder Wohnwagens zum Sitzen genutzt zu werden, wobei das Sitzelement ferner ausgebildet ist, um im Standbetrieb des Wohnmobils oder Wohnwagens als Aufstiegselement zum Erreichen der ersten Matratze genutzt zu werden, wenn die erste Matratze entlang der vertikalen Achse auf dem Küchenelement abgelegt ist.

Dies kann es einer Person ermöglichen bzw. erleichtern, die erste Matratze zu erreichen, ohne dass hierfür eine zusätzliche Treppe oder dergleichen erforderlich ist, indem das Sitzelement nicht nur zum Sitzen sondern auch als Treppenstufe zum Erreichen der ersten Matratze genutzt werden kann. Dies kann die Nutzungsmöglichkeiten der Wohnkabine weiter erhöhen bzw. den hierfür erforderlichen Raum weiter reduzieren.

Gemäß einem weiteren Aspekt der Erfindung weist das Wohnmobil oder der Wohnwagen wenigstens ein Paar einander entlang der Querachse gegenüberliegender Sitzelemente und ein dazwischen angeordnetes entlang der vertikalen Achse höhenverstellbares Tischelement auf, wobei das höhenverstellbare Tischelement ausgebildet ist, im Standbetrieb des Wohnmobils oder Wohnwagens entlang der vertikalen Achse gegenüber den Sitzelementen angehoben zu sein, um die Sitzelemente zum Sitzen an dem höhenverstellbaren Tischelement zu nutzen, und im Fahrbetrieb des Wohnmobils oder Wohnwagens entlang der vertikalen Achse gegenüber den Sitzelementen auf deren Höhe abgesenkt zu sein, um die Sitzelemente und das höhenverstellbare Tischelement als Liegefläche zu nutzen.

Hierdurch kann eine Nutzung eines Sitz- bzw. Essbereichs auch zum Schlafen ermöglicht werden. Dies kann die Nutzungsmöglichkeiten der Wohnkabine weiter erhöhen bzw. den hierfür erforderlichen Raum weiter reduzieren.

Die Sitzelemente vorzugsweise als Sitzbänke zu realisieren, kann die Stabilität der Sitzelemente erhöhen. Auch kann hierdurch die für beide Funktionen nutzbare Fläche der Sitzelemente erhöht werden.

Gemäß einem weiteren Aspekt der Erfindung weist das Wohnmobil oder der Wohnwagen wenigstens eine Tür zum Schließen und Freigeben einer Türöffnung einer Außenwand der Wohnkabine und einen Eingangsbereich im Innenraum der Wohnkabine auf, welcher unmittelbar vor der Tür angeordnet ist, wobei der Eingangsbereich eine Duschvorrichtung und einen Wasserablauf aufweist, so dass der Eingangsbereich ausgebildet ist, auch als Duschbereich genutzt zu werden.

Diesem Aspekt der Erfindung liegt die Erkenntnis zugrunde, dass ein Eingangsbereich eines Wohnmobils bzw. eines Wohnwagens bisher lediglich zum Betreten und Verlassen des Innenraums der Wohnkabine genutzt wird. Befinden sich somit die Personen im Innenraum der Wohnkabine, so kann der Eingangsbereich als ungenutzt Fläche angesehen werden. Somit kann erfindungsgemäß genau im Eingangsbereich, welcher üblicherweise Stehhöhe aufweist, eine Duschmöglichkeit geschaffen werden, ohne hierfür einen anderen Bereich des Innenraums der Wohnkabine verwenden bzw. verschwenden zu müssen. Dies kann die Nutzungsmöglichkeiten der Wohnkabine weiter erhöhen bzw. den hierfür erforderlichen Raum weiter reduzieren.

Gemäß einem weiteren Aspekt der Erfindung weist das Wohnmobil oder der Wohnwagen ein Trägerfahrzeug auf, welches die Wohnkabine als Aufbau festverbunden, vorzugsweise mittels einer 3-Punkt-Lagerung, oder trennbar aufnimmt.

Somit kann im Falle eines Wohnmobils eine Umsetzung der vorliegenden Erfindung erfolgen, indem eine Wohnkabine wie zuvor beschrieben auf ein Trägerfahrzeug aufgesetzt wird.

Dies kann festverbunden erfolgen, so dass die Wohnkabine feststehend und nur zerstörend bzw. mit hohem Aufwand vergleichbar der Montage des Wohnmobils wieder vom Trägerfahrzeug entfernt werden kann, d.h. nicht dazu vorgesehen ist, wieder vom Trägerfahrzeug entfernt zu werden. Dies kann die Stabilität der Verbindung von Wohnkabine und Trägerfahrzeug erhöhen.

Dies kann alternativ auch trennbar erfolgen, indem die Wohnkabine und das Trägerfahrzeug mittels einer geeigneten mechanischen Verbindung sowie ggfs. elektrischer, pneumatischer und bzw. oder hydraulischer Kontakt bzw. Verbindungen ausgebildet sind, voneinander getrennt zu werden, was die Flexibilität der Nutzung insbesondere des Trägerfahrzeugs für andere Zwecken mit anderen Aufsätzen ermöglichen kann. Dies kann als ein modulares Konzept angesehen werden. In diesem Fall ist die Verbindung von Wohnkabine und Trägerfahrzeug dazu ausgebildet, möglichst einfach und schnell getrennt sowie hergestellt zu werden.

In jedem Fall kann das Trägerfahrzeug vorzugsweise geländegängig ausgebildet sein, beispielsweise als SUV, Pickup oder dergleichen. Dies kann die Nutzung des Wohnmobils auch im Gelände ermöglichen, was die Nutzungsmöglichkeiten hinsichtlich der erreichbaren Orte erhöhen kann.

Die feste Verbindung von Wohnkabine als Aufbau und Trägerfahrzeug bzw. dessen Fahrgestell vorzugsweise mittels einer 3-Punkt-Lagerung auszuführen, kann die Vermeidung von Relativbewegungen zwischen Wohnkabine und Trägerfahrzeug ermöglichen bzw. dies möglichst verlässlich sicherstellen. Somit können die Wohnkabine und das Trägerfahrzeug bzw. dessen Fahrgestell stets gleichsinnig ausgerichtet bleiben.

Gemäß einem weiteren Aspekt der Erfindung ist bzw. sind ein Fahrersitz und bzw. oder ein Beifahrersitz des Trägerfahrzeugs ausgebildet, im Standbetrieb des Wohnmobils entlang der Längsachse nach vorne in eine Fahrerkabine des Trägerfahrzeugs bewegt, vorzugsweise geklappt, zu werden, wobei das Wohnmobil ferner wenigstens ein erstes Küchenelement aufweist, welches in der Wohnkabine angeordnet und ausgebildet ist, im Standbetrieb des Wohnmobils in den Bereich der Fahrerkabine des Trägerfahrzeugs, welcher von den dort wegbewegten, vorzugsweise weggeklappten, Fahrersitz und bzw. oder Beifahrersitz des Trägerfahrzeugs freigegeben wird, bewegt, vorzugsweise um die vertikale Achse geschwenkt zu sein, um das erste Küchenelement zu nutzen, und im Fahrbetrieb des Wohnmobils in die Wohnkabine bewegt, geschwenkt, zu sein, so dass der Fahrersitz und bzw. oder der Beifahrersitz des Trägerfahrzeugs innerhalb der Fahrerkabine des Trägerfahrzeugs zur Wohnkabine hinbewegt, vorzugsweise geklappt, und genutzt werden können.

Somit kann es erfindungsgemäß bei einem Wohnmobil ermöglicht werden, durch das Bewegen bzw. durch ein nach vorne Klappen von Fahrersitz und bzw. oder Beifahrersitz in der Fahrerkabine des Trägerfahrzeugs einen Bereich bzw. ein Volumen zu schaffen, in welchen das erste Küchenelement hineinbewegt werden kann, um genutzt zu werden. Da während des Standbetriebs der Fahrersitz und bzw. oder der Beifahrersitz nicht genutzt werden, kann der Fahrersitz und bzw. oder der Beifahrersitz auch wegbewegt bzw. umgeklappt werden, um dort im Fahrerraum das erste Küchenelement aufzunehmen, so dass hierfür kein bzw. weniger Raum bzw. Volumen im Inneren der Wohnkabine verwendet werden muss. Dies kann die Nutzungsmöglichkeiten der Wohnkabine weiter erhöhen bzw. den hierfür erforderlichen Raum weiter reduzieren.

Dabei das erste Küchenelement schwenkbar, insbesondere um die vertikale Achse, vorzusehen, kann die Stabilität der Anbindung des beweglichen bzw. schwenkbaren ersten Küchenelements an die Wohnkabine erhöhen. Dies kann auch die Zulassung dieser Funktion der Wohnkabine vereinfachen.

Gemäß einem weiteren Aspekt der Erfindung sind die Wohnkabine und eine Fahrerkabine des Trägerfahrzeugs miteinander verbunden, so dass eine Person zwischen der Wohnkabine und der Fahrerkabine des Trägerfahrzeugs hin und her wechseln kann. Dies kann es ermöglichen, zwischen der Wohnkabine und der Fahrerkabine des Trägerfahrzeugs hin und her zu wechseln, ohne das Wohnmobil zu verlassen. Dies kann die Personen vor Witterung, Wildtieren und dergleichen schützen.

Im Falle eines beweglichen bzw. schwenkbaren ersten Küchenelements kann hierzu, zumindest um die Fahrerkabine aus dem Inneren der Wohnkabine heraus erreichbar zu machen, ein Bewegen bzw. Schwenken des ersten Küchenelements in die Wohnkabine und ein nach hinten bewegen bzw. klappen des Fahrersitzes und bzw. oder des Beifahrersitzes des Trägerfahrzeugs erforderlich sein, was jedoch in dieser Reihenfolge aus dem Inneren der Wohnkabine heraus möglich ist. Somit kann auch ein Erreichen der Fahrerkabine in diesem Fall ermöglicht werden, ohne das Wohnmobil zu verlassen.

Mehrere Ausführungsbeispiele und weitere Vorteile der Erfindung werden nachstehend im Zusammenhang mit den folgenden Figuren rein schematisch dargestellt und näher erläutert. Darin zeigt:
- Figur 1: eine seitliche Darstellung eines erfindungsgemäßen Wohnmobils gemäß eines ersten Ausführungsbeispiels von links;
- Figur 2: eine perspektivische Darstellung des Wohnmobils der Figur 1 von schräg hinten oben rechts;
- Figur 3: eine teilweise transparente Darstellung des Wohnmobils der Figur 1 direkt von der rechten Seite mit eingefahrenem Aufstelldach;
- Figur 4: die Darstellung der Figur 3 mit ausgefahrenem Aufstelldach und ohne Tür;
- Figur 5: die Darstellung der Figur 4 perspektivisch von schräg hinten oben rechts ferner ohne Seitenelemente und Heckelement;
- Figur 6: den oberen Bereich der Darstellung der Figur 4 perspektivisch von schräg hinten rechts mit teilweise dargestellten Wandteilen;
- Figur 7: eine seitliche Darstellung des erfindungsgemäßen Wohnmobils gemäß eines zweiten Ausführungsbeispiels von rechts mit ausgefahrenem Aufstelldach und teilweise dargestellten Wandteilen;
- Figur 8: eine perspektivische Darstellung der Figur 7 von schräg hinten oben rechts mit allen Wandteilen;
- Figur 9: die Darstellung der Figur 7 von weiter oben und ohne dargestelltes Aufstelldach, Stoffabdeckung und Wandteile;
- Figur 10: die Darstellung der Figur 9 von schräg vorne oben links;
- Figur 11: die Darstellung der Figur 9 von oben;
- Figur 12: eine Darstellung des erfindungsgemäßen Wohnmobils gemäß des ersten Ausführungsbeispiels von oben;
- Figur 13: eine Darstellung des vorderen Bereichs der Figur 9 mit Matratzen; und
- Figur 14: eine perspektivische Darstellung des erfindungsgemäßen Wohnmobils gemäß des ersten Ausführungsbeispiels von schräg vorne oben links mit aufgestellten Solarzellen des Aufstelldachs.

Die o.g. Figuren werden in kartesischen Koordinaten betrachtet. Es erstreckt sich eine Längsachse X, welche auch als Tiefe X oder als Länge X bezeichnet werden kann. Senkrecht zur Längsachse X erstreckt sich eine Querachse Y, welche auch als Breite Y bezeichnet werden kann. Senkrecht sowohl zur Längsachse X als auch zur Querachse Y erstreckt sich eine vertikale Achse Z, welche auch als Höhe Z bezeichnet werden kann und der Richtung der Schwerkraft bzw. der Gravitationskraft entspricht. Die Längsachse X und die Querachse Y bilden gemeinsam die Horizontale X, Y, welche auch als horizontale Ebene X, Y bezeichnet werden kann.

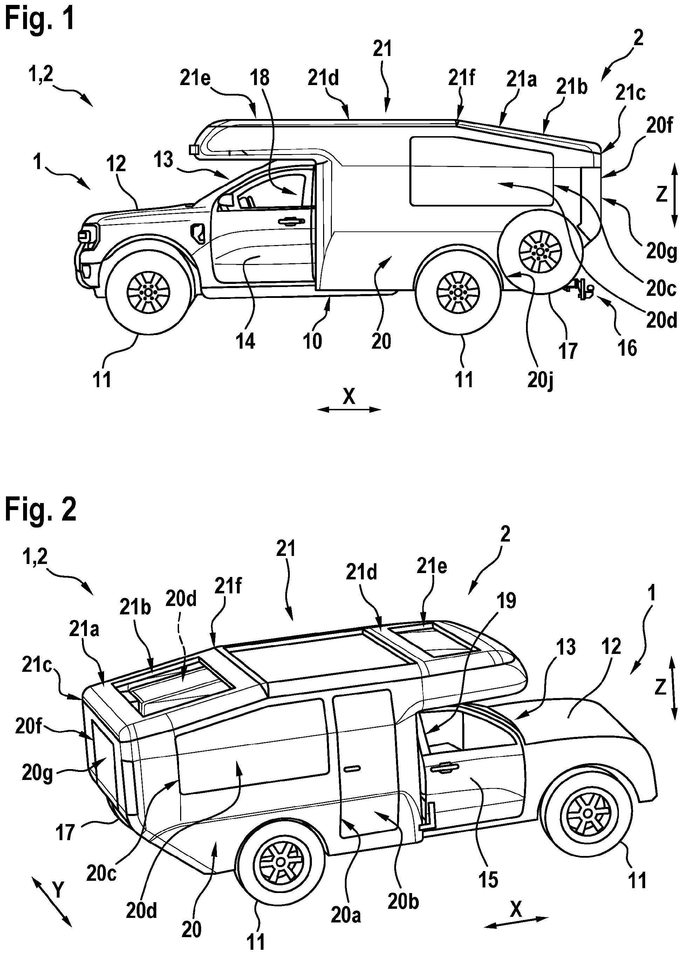

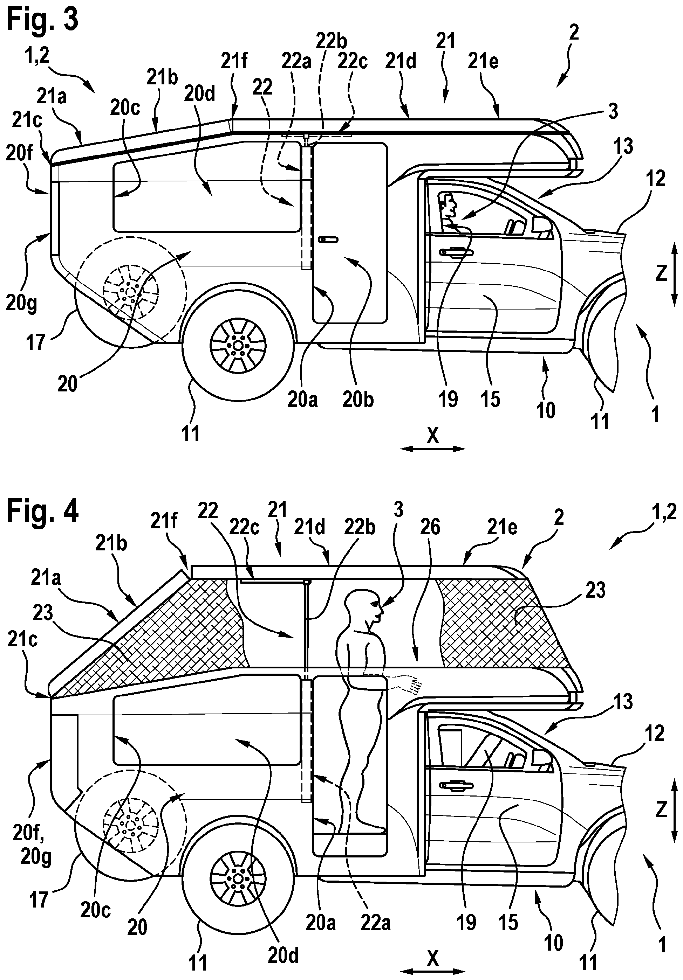

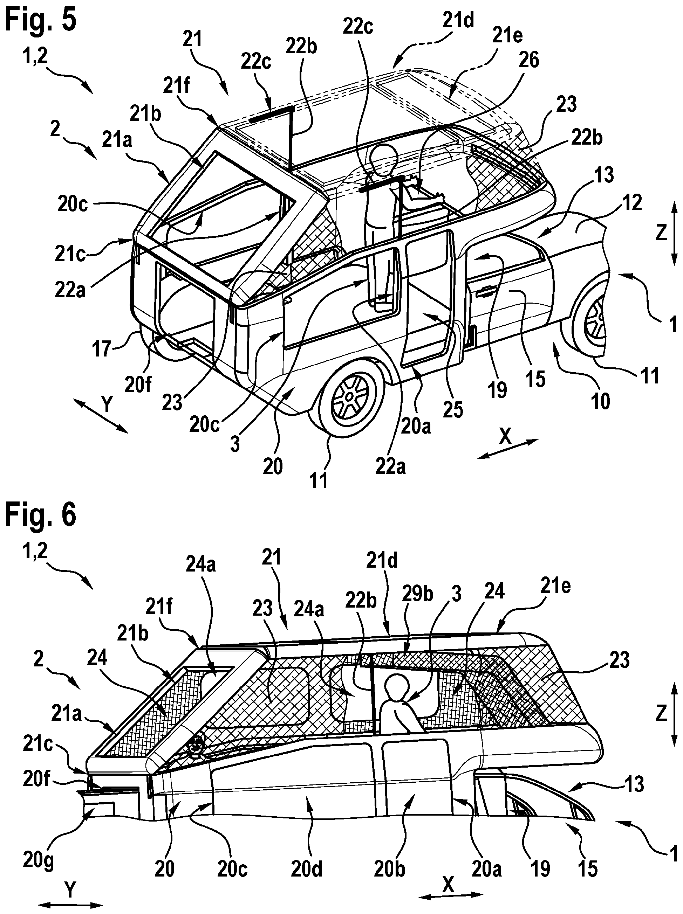

Figur 1 zeigt eine seitliche Darstellung eines erfindungsgemäßen Wohnmobils 1, 2 gemäß eines ersten Ausführungsbeispiels von links. Figur 2 zeigt eine perspektivische Darstellung des Wohnmobils 1, 2 der Figur 1 von schräg hinten oben rechts. Figur 3 zeigt eine teilweise transparente Darstellung des Wohnmobils 1, 2 der Figur 1 direkt von der rechten Seite mit eingefahrenem Aufstelldach 21. Figur 4 zeigt die Darstellung der Figur 3 mit ausgefahrenem Aufstelldach 21 und ohne Tür 20b. Figur 5 zeigt die Darstellung der Figur 4 perspektivisch von schräg hinten oben rechts ferner ohne Seitenelemente 20d und Heckelement 20g. Figur 6 zeigt den oberen Bereich der Darstellung der Figur 4 perspektivisch von schräg hinten rechts mit teilweise dargestellten Wandteilen 24.

Die vorliegende Erfindung wird am Beispiel eines Wohnmobils 1, 2 betrachtet. Das Wohnmobil 1, 2 weist in jedem Fall ein Trägerfahrzeug 1 auf, dessen Fahrgestell 10 verwendet wird, um eine Wohnkabine 2 zu tragen, welche auch als Aufbau 2 oder als Wohnmobilaufbau 2 bezeichnet werden kann und weiter unten gemäß zweier Ausführungsbeispiele noch näher beschrieben werden wird.

Das Trägerfahrzeug 1 kann auf seinen vier Fahrzeugrädern 11, welche am Fahrgestell 10 sitzen, auf einem Untergrund (nicht dargestellt) aus eigener Kraft fahren bzw. sich bewegen. Das Trägerfahrzeug 1 ist dabei geländegängig ausgebildet, indem ein SUV oder dergleichen als Trägerfahrzeug 1 verwendet wird, so dass das hierauf basierende Wohnmobil 1, 2 auch im Gelände verwendet werden kann.

Der Antrieb bzw. Motor (nicht dargestellt) des Trägerfahrzeugs 1 befindet sich im Motorraum (nicht dargestellt) unterhalb einer Motorhaube 12 im vorderen Bereich des Trägerfahrzeugs 1. Entlang der Längsachse X nach hinten schließt sich dem Motorraum bzw. der Motorhaube 12 eine Fahrerkabine 13 an, in welcher, in Fahrtrichtung betrachtet, links ein Fahrersitz 18 und rechts ein Beifahrersitz 19 angeordnet ist. Der Fahrersitz 18 kann durch eine Fahrertür 14 und der Beifahrersitz 19 durch eine Beifahrertür 15 von jeweils einer Person 3 als Benutzer 3 erreicht werden.

Am entlang der Längsachse X hinteren Ende des Trägerfahrzeugs 1 ist eine Anhängekupplung 16 vorgesehen. Auf der linken hinteren Seite der Wohnkabine 2 ist ein Ersatzrad 17 in einer Ersatzradaufnahme 20j einer Außenwand 20 der Wohnkabine 2 entnehmbar befestigt.

Die Wohnkabine 2 ist feststehend und dauerhaft, d.h. nicht lösbar bzw. nicht entfernbar, auf dem Fahrgestell 10 des Trägerfahrzeugs 1 angeordnet. Die Wohnkabine 2 wird nach unten, nach hinten sowie zu beiden Seiten zumindest im Wesentlichen von der bereits erwähnten Außenwand 20 gebildet, welche einen Innenraum (nicht bezeichnet) bzw. ein Inneres der Wohnkabine 2 im Wesentlichen umschließt.

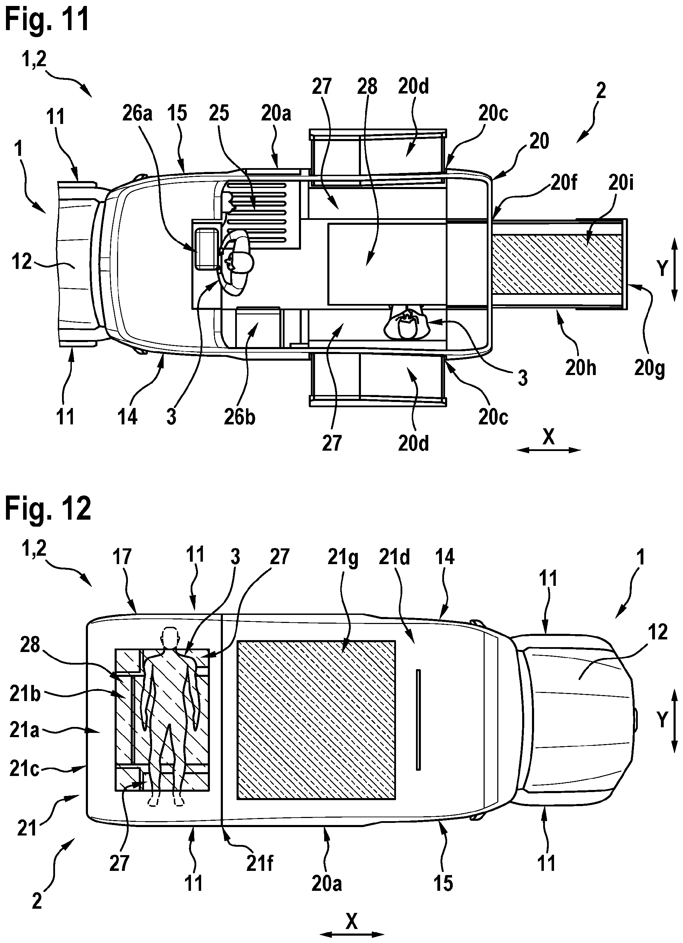

Auf der rechten Seite der Außenwand 20 ist unmittelbar hinter der Beifahrertür 15 eine Türöffnung 20a in der Außenwand 20 vorgesehen, welche mittels einer schwenkbaren Tür 20b geschlossen werden kann. Durch die geöffnete Tür 20b bzw. durch die freigegebene Türöffnung 20a können Personen 3 nahezu aufrecht in das Innere der Wohnkabine 2 eintreten und dort zunächst in einen Eingangsbereich 25 gelangen, vgl. Figur 11, welcher mittels einer dort vorgesehenen Duschvorrichtung (nicht dargestellt) und einem Wasserablauf (nicht dargestellt) im Boden platzsparend auch als Duschbereich 25 genutzt werden kann. Dort kann auch eine ausklappbare Trockentoilette (nicht dargestellt) vorgesehen sein.

Entlang der Längsachse X schließt sich auf der rechten Seite ein rechtes Seitenelement 20d der Tür 20b an, welches durch eine Seitenelementöffnung 20c entlang der Querachse Y pneumatisch mittels der Druckluft eines Kompressors (nicht dargestellt) des Wohnmobils 1, 2 ein- und ausgefahren werden kann, um den Innenraum der Wohnkabine 2 zu vergrößern. Spiegelsymmetrisch ist ein gleiches linkes Seitenelement 20d auf der linken Seite, d.h. auf der Fahrerseite, vorgesehen. Beide Seitenelemente 20d weisen einen Stauraum (nicht dargestellt) auf, welcher jeweils stets von innen zugänglich ist und Geschirr, Kochutensilien, Vorräte und dergleichen aufnehmen kann. Beide Seitenelemente 20d weisen oben auf sich drauf Solarzellen 20e auf, um elektrische Energie zu erzeugen.

Vergleichbar ist an der Rückseite der Wohnkabine 2 ein Heckelement 20g vorgesehen, welches durch eine Heckelementöffnung 20f entlang der Längsachse X pneumatisch ein- und ausgefahren werden kann. Auch das Heckelement 20g weist oben auf sich drauf Solarzellen 20i auf. Das Heckelement 20g bietet ebenfalls einen Stauraum 20h, welcher jedoch lediglich von außen im ausgefahrenen Zustand zugänglich ist, um insbesondere Artikel wie Stühle und dergleichen für die Nutzung außerhalb der Wohnkabine 2 aufzunehmen.

Entlang der vertikalen Achse Z nach oben hin endet die Außenwand 20 mit einer umlaufenden Kante (nicht bezeichnet), welcher im Wesentlichen in der Horizontalen X, Y verläuft. Die Kante kann auch als Rand bezeichnet werden. Auf der Kante der Außenwand 20 liegt ein Aufstelldach 21 mit einer korrespondierenden Kante (nicht bezeichnet) auf. Das Aufstelldach 21 weist gemäß des ersten Ausführungsbeispiels ein erstes Dachelement 21a mit einem Fensterelement 21b auf. Das erste Dachelement 21a ist mittels eines Schwenkelements 21c in Form eines Filmscharniers 21c entlang der hinteren Kante bzw. des hinteren Rands der Außenwand 20 entlang der Querachse Y mit der Außenwand 20 verbunden, so dass das erste Dachelement 21a um die Querachse Y gegenüber der Außenwand 20 geschwenkt werden kann.

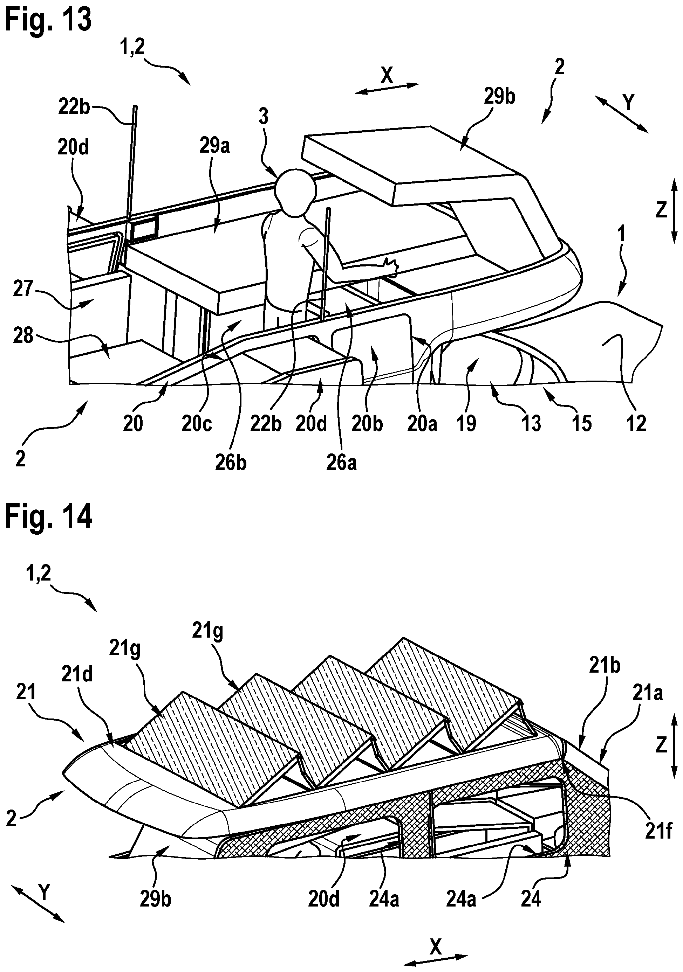

Das Aufstelldach 21 weist ferner ein zweites Dachelement 21d als Hauptdach 21d auf, welches ebenfalls ein Fensterelement 21e im vorderen Bereich, d.h. nahe der Motorhaube 12, aufweist, um liegenden Personen 3 den Blick direkt nach oben zu ermöglichen. Das zweite Dachelement 21d ist ebenfalls mittels eines Schwenkelements 21f in Form eines Stangenscharniers 21f mit derjenigen Kante (nicht bezeichnet) des ersten Dachelements 21a um die Querachse Y schwenkbar verbunden, welche dem Filmscharnier 21c abgewandt ist. Das zweite Dachelement 21d kann Solarzellen 21g aufweisen, vgl. Figuren 12 und 14 ohne Fensterelement 21e, welche auch aufgestellt werden können, vgl. Figur 14, um die Ausrichtung zur Sonne zu verbessern sowie hierdurch als Sahara-Dach zu wirken.

Zum Ein- und Ausfahren des Aufstelldachs 21 ist ein Hubmechanismus 22 vorgesehen, welcher ein Paar von Linearantrieben 22a, 22b umfasst, welche einander entlang der Querachse Y gegenüberliegend unmittelbar neben den ein-/ausfahrbaren Seitenelementen 20d bzw. zwischen dem rechten Seitenelement 20d und der Tür 20b bzw. dessen Türöffnung 20a innerhalb der Außenwand 20 angeordnet sind. Dabei ist jeweils ein Stator 22a der Linearantriebe 22a, 22b feststehend dort angeordnet und mit dem Kompressor verbunden, um auch die Linearantriebe 22a, 22b pneumatisch zu betreiben. Mittels der Druckluft des Kompressors kann jeweils ein Abtrieb 22b in Form eines Kolbens 22b geradlinig entlang der vertikalen Achse Z aus dem jeweiligen Statur 22a aus- und durch Ablassen des Luftdrucks mittels Schwerkraft wieder eingefahren werden.

Um dabei die rein translatorische Bewegung der Abtriebe 22b entlang der vertikalen Achse Z in die Schwenkbewegung der beiden Dachelemente 21a, 21d zu transformieren, weist das zweite Dachelement 21d jeweils eine Linearführung 22c in Form einer Schiene 22c auf, welche sich entlang der Längsachse X jeweils am seitlichen Rand (nicht bezeichnet) des zweiten Dachelements 21d erstreckt. Dort ist das zweite Dachelement 21d jeweils mit dem dem Stator 22a abgewandten Ende des Kolbens 22b translatorisch beweglich verbunden, sodass durch das Ausfahren der Kolben 22b geradlinig entlang der vertikalen Achse Z das zweite Dachelement 22d gleichzeitig entlang der vertikalen Achse Z angehoben sowie entlang der Längsachse X nach hinten verschoben wird. Hierdurch hebt das zweite Dachelement 21d aufgrund der scharnierartigen Kopplung das erste Dachelement 21a durch Schwenken an, wodurch gleichzeitig das erste Dachelement 21a aufgrund der scharnierartigen Kopplung mit der hinteren Kante der Außenwand 20 nach oben geschwenkt wird, siehe insbesondere Figuren 3 und 4. Diese Bewegung endet mit einem horizontal ausgerichteten zweiten Dachelement 21d, welches den Personen 3 in den wesentlichen Bereichen des Innenraums der Wohnkabine 2 eine gleichbleibende und ausreichende Stehhöhe bietet, siehe insbesondere Figur 4.

Um dabei eine Lücke bzw. einen Zwischenraum (nicht bezeichnet) zwischen dem oberen Rand der Außenwand 20 und dem unteren Rand der beiden Dachelemente 21a, 21d bzw. des Aufstelldachs 21 zu schließen, ist dort eine Stoffabdeckung 23 vergleichbar dem Stoff von Cabrio-Dächern vorgesehen, welche entsprechend zugeschnitten und an den Rändern feststehend befestigt ist, vgl. beispielsweise Figuren 4 bis 6 abschnittsweise dargestellt. Wird das Aufstelldach 21 angehoben, so wird die Stoffabdeckung 23 gespannt. Wird das Aufstelldach 21 eingefahren, so fällt bzw. klappt die Stoffabdeckung 23 in das Innere der Wohnkabine 2. Mittels der Stoffabdeckung 23 wird der Innenraum der Wohnkabine 2 durchgängig von der Umgebung getrennt, so dass Wind, Regen und dergleichen stets aus dem Inneren der Wohnkabine 2 ferngehalten sowie Wärme im Inneren der Wohnkabine 2 gehalten werden kann.

Um die Stabilität und um die thermische Isolierung sowie Geräuschisolierung dieses Zwischenraums zwischen dem oberen Rand der Außenwand 20 und dem unteren Rand des Aufstelldachs 21 weiter zu verbessern, sind mehrere Wandteile 24 als Klappwände 24 vorgesehen, welche dann von den Personen 3 hoch- oder runtergeklappt werden können, wenn das Aufstelldach 21 ausgefahren und die Stoffabdeckung 23 gespannt ist, vgl. Figur 6. Hierzu können die Klappwände 24 aus expandiertem Polystyrol oder aus extrudiertem Polystyrol ausgebildet sowie ummantelt sein. Die Klappwände 24 können mittels Scharnier (nicht dargestellt) an den Innenseiten (nicht bezeichnet) der Außenwand 20 oder des Aufstelldachs 21 schwenkbar befestigt sein.

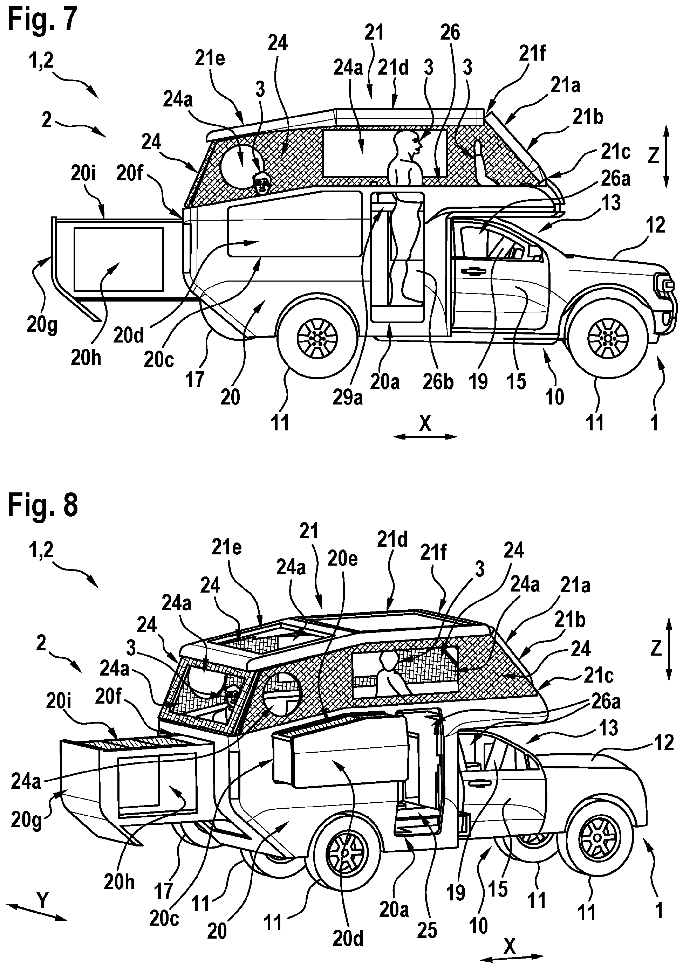

Um den Personen 3 aus dem Inneren der Wohnkabine 2 den Blick nach draußen zu ermöglichen sowie um mehr Sonnenlicht in den Innenraum der Wohnkabine 2 gelangen zu lassen, weist die Stoffabdeckung Fensterelemente (nicht dargestellt) sowie weisen die Klappwände 24 korrespondierend angeordnete Fensteraussparungen 24a auf, vgl. Figuren 7 und 8.

Figur 7 zeigt eine seitliche Darstellung des erfindungsgemäßen Wohnmobils 1, 2 gemäß eines zweiten Ausführungsbeispiels von rechts mit ausgefahrenem Aufstelldach 21 und teilweise dargestellten Wandteilen 24. Figur 8 zeigt eine perspektivische Darstellung der Figur 7 von schräg hinten oben rechts mit allen Wandteilen 24.

Gemäß des zweiten Ausführungsbeispiels ist das erste Dachelement 21a entlang der Längsachse X vorne angeordnet, so dass das entsprechende Filmscharnier 21c an der vorderen Kante der Außenwand 20 oberhalb der Fahrerkabine 13 entlang der Querachse Y verläuft. Auch in diesem Fall weist das erste Dachelement 21a ein Fensterelement 21b auf, um liegenden Personen 3 den Blick nach oben und nun auch nach vorne zu ermöglichen. Das Fensterelement 21e des zweiten Dachelements 21d ist im hinteren Bereich angeordnet, um den Innenraum der Wohnkabine 2 dort von oben mittels Sonnenlicht zu erhellen, wo gesessen werden kann, wie weiter unten noch näher beschrieben werden wird.

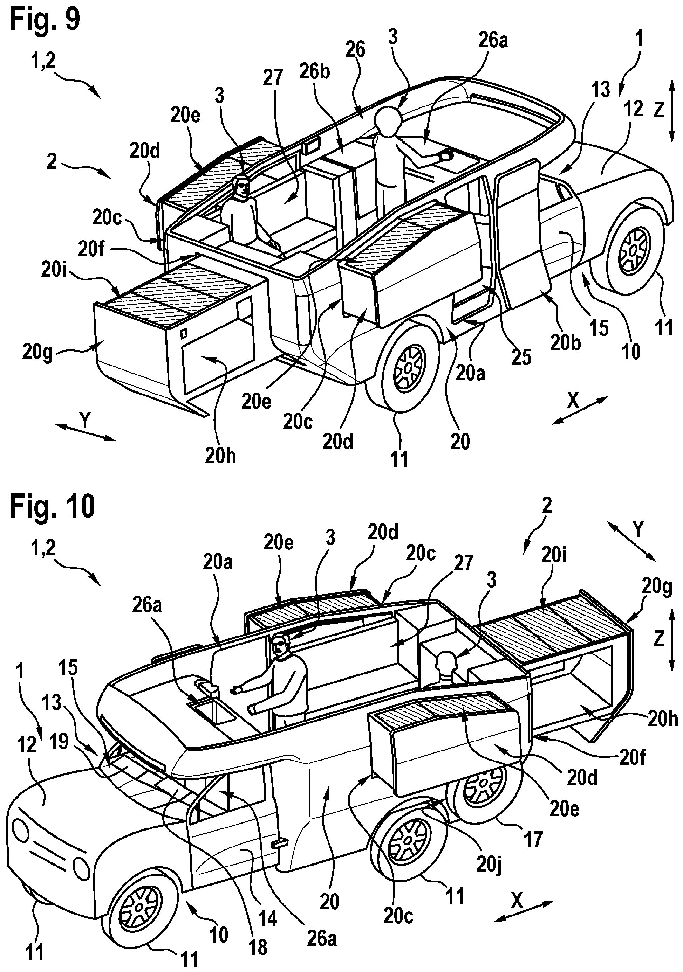

Figur 9 zeigt die Darstellung der Figur 7 von weiter oben und ohne dargestelltes Aufstelldach 21, Stoffabdeckung 23 und Wandteile 24. Figur 10 zeigt die Darstellung der Figur 9 von schräg vorne oben links. Figur 11 zeigt die Darstellung der Figur 9 von oben. Figur 13 zeigt eine Darstellung des vorderen Bereichs der Figur 9 mit Matratzen 29a, 29b.

Anhand der Darstellungen der Figuren 9 bis 11 kann nun eine Küchenzeile 26 mit einem ersten Küchenelement 26a, welches einen Kühlschrank 26a und eine Spüle 26a aufweist, und mit einem zweiten Küchenelement 26b, welches ein Kochfeld 26b und einen Backofen 26b aufweist, näher betrachtet werden. So ist das erste Küchenelement 26a um die vertikale Achse Z schwenkbar am zweiten feststehenden Küchenelement 26b angeordnet. Auch sind der Fahrersitz 18 und der Beifahrersitz 19 entlang der Längsachse X nach vorne hin klappbar ausgebildet, so dass der Fahrersitz 18 und der Beifahrersitz 19 bei Nicht-Gebrauch nach vorne geklappt werden können, um den hinteren Bereich der Fahrerkabine 13 freizugeben. In diesen Bereich der Fahrerkabine 13 kann dann das erste Küchenelement 26a geschwenkt werden, um genutzt zu werden, ohne dabei den Innenraum der Wohnkabine 2 einzuschränken.

Soll wenigstens der Fahrersitz 18 wieder verwendet werden, kann das erste Küchenelement 26a wieder zur Seite geschwenkt sowie der Fahrersitz 18 nach hinten geklappt und eingenommen werden, um das Wohnmobil 1, 2 zu fahren. Hierzu muss das Wohnmobil 1, 2 nicht verlassen werden.

Der Bereich oberhalb der beiden Küchenelemente 26a, 26b kann, falls die Küchenzeile 26 nicht verwendet wird, stattdessen zum Schlafen verwendet werden. Hierzu können zwei Matratzen 29a, 29b vorgesehen sein, welche sich entlang der Längsachse X erstrecken und entlang der Querachse Y nebeneinander angeordnet sind. Beide Matratzen 29a, 29b können etwa mittig knickbar ausgebildet sein, um sich der Kontur des ausgefahrenen Aufstelldachs 21 jeweils anzupassen und so raumsparend hochgeklappt zu werden, vgl. Figur 13, was ebenfalls pneumatisch erfolgen kann. Für die rechte Matratze 29b kann im Eingangsbereich 25 eine ausklappbare bzw. ausfahrbare Stützfläche (nicht dargestellt) vorgesehen sein, um die zweite Matratze 29b vergleichbar dem zweiten Küchenelement 26b von unten abzustützen.

Beide Matratzen 29a, 29b können über jeweils ein seitlich im hinteren Bereich der Wohnkabine 20 angeordnetes Sitzelement 27 in Form einer entlang der Längsachse X verlaufenden Sitzbank 27 als Treppe bzw. als Aufstiegshilfe vergleichsweise einfach erreicht und wieder verlassen werden.

Die beiden Sitzbänke 27 können zusammen mit einem höhenverstellbaren Tischelement 28 in Form eines höhenverstellbaren Tisches 28, welches entlang der Querachse Y mittig zwischen den beiden Sitzbänken 27 angeordnet ist, zum Sitzen, zum Essen und dergleichen genutzt werden. Auch kann der Tisch 28 in Abwesenheit der Personen 3 auf den Sitzbänken 27 auf deren Höhe entlang der vertikalen Achse Z heruntergefahren werden, um eine ebene Fläche in der Horizontalen X, Y zu schaffen, welche mittels Matratzen (nicht dargestellt) ebenfalls zum Schlafen genutzt werden kann, vgl. Figur 12.

Wird das Wohnmobil 1, 2 nun in einem Fahrbetrieb verwendet, d.h. wird das Wohnmobil 1, 2 gefahren bzw. kann das Wohnmobil 1, 2 gefahren werden, so sind die Seitenelemente 20d, das Heckelement 20g sowie das Aufstelldach 21 eingefahren, um die Außenmaße des Wohnmobils 1, 2 zu minimieren. Dabei ist der höhenverstellbare Tisch 28 auf die Höhe der Sitzbänke 27 abzusenken, um dem eingefahrenen Heckelement 20g Platz zu machen. Auch ist das erste Küchenelement 26a zum zweiten Küchenelement 26b hinzuschwenken und zu befestigen sowie sind der Fahrersitz 18 und der Beifahrersitz 19 nach hinten zu klappen. In diesem Zustand ist das Wohnmobil 1, 2 fahrbereit. Der Innenraum der Wohnkabine 20 wird fast vollständig von den beweglichen Elementen, welche nun eingefahren bzw. eingeschwenkt sind, ausgefüllt.

Wird das Wohnmobil 1, 2 abgestellt und in einen Standbetrieb zum Nutzen des Innenraums der Wohnkabine 20 versetzt, so werden die Seitenelemente 20d, das Heckelement 20g sowie das Aufstelldach 21 ausgefahren. Auch werden der Fahrersitz 18 und der Beifahrersitz 19 nach vorne geklappt und das erste Küchenelement 26a in die Fahrerkabine 13 geschwenkt. Ferner wird der höhenverstellbare Tisch 28 ausreichend angehoben, um am Tisch 28 sitzen zu können.

Auf diese Art und Weise kann erfindungsgemäß ein vergleichsweise komfortables geländegängiges Wohnmobil 1,2 mit einem vergleichsweise geringen zulässigen Gesamtgewicht von weniger als 3,5 t geschaffen werden, welches im Fahrbetrieb eine vergleichsweise geringe Länge von weniger als 6,00 m, eine vergleichsweise geringe Breite von höchstens 2,10 m und eine vergleichsweise geringe Höhe von höchstens 2,25 m aufweist. Hierdurch kann das erfindungsgemäße Wohnmobil 1, 2 innerhalb eines ISO-Containers angeordnet und somit auch per Schiff transportiert werden.

### BEZUGSZEICHENLISTE (Teil der Beschreibung)

- X: Längsachse; Tiefe; Länge
- Y: Querachse; Breite
- Z: vertikale Achse; Höhe
- X, Y: Horizontale; horizontale Ebene

- 1, 2: Wohnmobil

- 1: Trägerfahrzeug
- 10: Fahrgestell
- 11: Fahrzeugräder
- 12: Motorhaube
- 13: Fahrerkabine
- 14: Fahrertür
- 15: Beifahrertür
- 16: Anhängekupplung
- 17: Ersatzrad
- 18: Fahrer-/Beifahrersitz

- 2: Wohnkabine; (Wohnmobil-)Aufbau
- 20: Außenwand
- 20a: Türöffnung
- 20b: Tür
- 20c: Seitenelementöffnungen
- 20d: Seitenelemente; Slide-Out's
- 20e: Solarzellen der Seitenelemente 20d
- 20f: Heckelementöffnung
- 20g: Heckelement
- 20h: Stauraum des Heckelements 20g
- 20i: Solarzellen des Heckelements 20g
- 20j: Ersatzradaufnahme
- 21: Aufstelldach
- 21a: erstes Dachelement
- 21b: Fensterelement des ersten Dachelements 21a
- 21c: Schwenkelement bzw. Filmscharnier zwischen Außenwand 20 und erstem Dachelement 21a
- 21d: zweites Dachelement; Hauptdach
- 21e: Fensterelement des zweiten Dachelements 21d
- 21f: Schwenkelement bzw. Stangenscharnier zwischen erstem Dachelement 21a und zweitem Dachelement 21d
- 21g: Solarzellen des zweiten Dachelements 21d
- 22: Hubmechanismus zwischen Außenwand 20 und Aufstelldach 21
- 22a, 22b: Linearantriebe bzw. (pneumatische oder hydraulische) Hubzylinder des Hubmechanismus 22
- 22a: Statoren der Linearantriebe 22a, 22b
- 22b: Abtrieb bzw. Kolben der Linearantriebe 22a, 22b
- 22c: Linearführungen bzw. Schienen des Hubmechanismus 22
- 23: Stoffabdeckung zwischen Außenwand 20 und Aufstelldach 21
- 24: Wandteile bzw. Klappwände zwischen Außenwand 20 und Aufstelldach 21
- 24a: Fensteraussparungen der Wandteile 24
- 25: Eingangsbereich; Duschbereich
- 26: Küchenzeile
- 26a: erstes Küchenelement; Kühlschrank; Spüle
- 26b: zweites Küchenelement; Kochfeld; Backofen
- 27: Sitzelemente; Sitzbänke
- 28: höhenverstellbares Tischelement; höhenverstellbarer Tisch
- 29a: erste Matratze
- 29b: zweite Matratze

- 3: Personen; Benutzer

## Patentansprüche

1. Wohnmobil (1, 2) oder Wohnwagen
mit einer Wohnkabine (2) mit einer zum Wohnen ausgebildeten Inneneinrichtung,
wobei die Wohnkabine (2) wenigstens ein Element aufweist, welches ausgebildet ist,
im Standbetrieb des Wohnmobils (1, 2) oder Wohnwagens ausgefahren zu sein, um den Innenraum der Wohnkabine (2) zu vergrößern, und
im Fahrbetrieb des Wohnmobils (1, 2) oder Wohnwagens eingefahren zu sein, um die Abmaße der Wohnkabine (2) zu verringern.

2. Wohnmobil (1, 2) oder Wohnwagen nach Anspruch 1,
wobei ein ein-/ausfahrbares Element der Wohnkabine (2) ein Aufstelldach (21) ist, welches ausgebildet ist, mittels eines Hubmechanismus (22)
im Standbetrieb gegenüber einer Außenwand (20) der Wohnkabine (2) entlang der vertikalen Achse (Z) angehoben zu sein, um den Innenraum der Wohnkabine (2) zu vergrößern, und
im Fahrbetrieb gegenüber der Außenwand (20) der Wohnkabine (2) entlang der vertikalen Achse (Z) abgesenkt zu sein, um die Höhe der Wohnkabine (2) zu verringern.

3. Wohnmobil (1, 2) oder Wohnwagen nach Anspruch 2,
wobei der Hubmechanismus (22) wenigstens einen Linearantrieb (22a, 22b), vorzugsweise ein entlang der Querachse (Y) zueinander beabstandetes Paar von Linearantrieben (22a, 22b), aufweist,
wobei ein Stator (22a) des Linearantriebs (22a, 22b) feststehend an der Wohnkabine (2) angeordnet, vorzugsweise in eine Seitenwand der Wohnkabine (2) integriert, und ausgebildet ist, einen Abtrieb (22b) des Linearantriebs (22a, 22b) translatorisch entlang der vertikalen Achse (Z) zu bewegen,
wobei der Abtrieb (22b) dem Stator (22a) abgewandt entlang der Längsachse (X) beweglich mit einer Linearführung (22c) des Hubmechanismus (22) verbunden ist,
wobei die Linearführung (22c) des Hubmechanismus (22) feststehend an dem Aufstelldach (21) angeordnet ist.

4. Wohnmobil (1, 2) oder Wohnwagen nach Anspruch 2 oder 3,
wobei zwischen der Außenwand (20) und dem Aufstelldach (21) eine Stoffabdeckung (23), vorzugsweise mit wenigstens einem Fensterelement, angeordnet ist, welche ausgebildet ist,
im Standbetrieb des Wohnmobils (1, 2) oder Wohnwagens entlang der vertikalen Achse (Z) gespannt zu sein, um einen Zwischenraum zwischen der Außenwand (20) und dem Aufstelldach (21) der Wohnkabine (2) flächig glatt zu verschließen, und
im Fahrbetrieb des Wohnmobils (1, 2) oder Wohnwagens in den Innenraum der Wohnkabine (2) hineinzuragen, um den Zwischenraum zwischen der Außenwand (20) und dem Aufstelldach (21) der Wohnkabine (2) freizugeben.

5. Wohnmobil (1, 2) oder Wohnwagen nach Anspruch 4,
ferner mit einer Mehrzahl von Wandteilen (24), vorzugsweise Klappwänden (24), vorzugsweise mit wenigstens einer Fensteraussparung (24a) korrespondierend zu einem Fensterelement der Stoffabdeckung (23), welche ausgebildet sind,
im Standbetrieb des Wohnmobils (1, 2) oder Wohnwagens von Innen im Zwischenraum der Außenwand (20) und des Aufstelldachs (21) flächig angeordnet, vorzugsweise geklappt, zu sein, und
im Fahrbetrieb des Wohnmobils (1, 2) oder Wohnwagens in den Innenraum der Wohnkabine (2) entfernt, vorzugsweise geklappt, zu sein, um den Zwischenraum zwischen Außenwand (20) und dem Aufstelldach (21) der Wohnkabine (2) freizugeben.

6. Wohnmobil (1, 2) oder Wohnwagen nach einem der Ansprüche 2 bis 5,
wobei das Aufstelldach (21) wenigstens aufweist:
ein erstes Dachelement (21a), vorzugsweise mit wenigstens einem Fensterelement (21b) und/oder mit Solarzellen, welches mittels wenigstens eines Schwenkelement (21c), vorzugsweise mittels eines Filmscharniers (21c), entlang der Querachse (Y) mit der Außenwand (20) schwenkbar verbunden ist, und
ein zweites Dachelement (21d), vorzugsweise mit wenigstens einem Fensterelement (21e) und/oder mit, vorzugsweise aufstellbaren, Solarzellen (21g), welches mittels wenigstens eines Schwenkelement (2fc), vorzugsweise mittels eines Stangenscharniers (21f), entlang der Querachse (Y) mit dem ersten Dachelement (21a) schwenkbar verbunden ist.

7. Wohnmobil (1, 2) oder Wohnwagen nach einem der vorangehenden Ansprüche,
wobei ein ein-/ausfahrbares Element der Wohnkabine (2) wenigstens ein Seitenelement (20d), vorzugsweise mit Solarzellen (20e), ist, welches ausgebildet ist,
im Standbetrieb durch eine korrespondierende Seitenöffnung (20c) einer Außenwand (20) der Wohnkabine (2) gegenüber der Außenwand (20) der Wohnkabine (2) entlang der Querachse (Y) ausgefahren zu sein, um den Innenraum der Wohnkabine (2) zu vergrößern und/oder den Zugriff auf einen Stauraum des Seitenelements zu ermöglichen, und
im Fahrbetrieb durch die korrespondierende Seitenöffnung (20c) der Außenwand (20) der Wohnkabine (2) gegenüber der Außenwand (20) der Wohnkabine (2) entlang der Querachse (Y) eingefahren zu sein, um die Breite der Wohnkabine (2) zu verringern.

8. Wohnmobil (1, 2) oder Wohnwagen nach einem der vorangehenden Ansprüche,
wobei ein ein-/ausfahrbares Element der Wohnkabine (2) wenigstens ein Heckelement (20g), vorzugsweise mit Solarzellen (20i), ist, welches ausgebildet ist,
im Standbetrieb durch eine korrespondierende Hecköffnung (20f) einer Außenwand (20) der Wohnkabine (2) gegenüber der Außenwand (20) der Wohnkabine (2) entlang der Längsachse (X) ausgefahren zu sein, um den Innenraum der Wohnkabine (2) zu vergrößern und/oder den Zugriff auf einen Stauraum (20h) des Heckelements (20g) zu ermöglichen, und
im Fahrbetrieb durch die korrespondierende Hecköffnung (20f) der Außenwand (20) der Wohnkabine (2) gegenüber der Außenwand (20) der Wohnkabine (2) entlang der Längsachse (X) eingefahren zu sein, um die Länge der Wohnkabine (2) zu verringern.

9. Wohnmobil (1, 2) oder Wohnwagen nach einem der vorangehenden Ansprüche
mit wenigstens einem Küchenelement (26a, 26b) und
mit wenigstens einer ersten Matratze (29a), welche ausgebildet ist,
im Standbetrieb des Wohnmobils (1, 2) oder Wohnwagens entlang der vertikalen Achse (Z) oberhalb des Küchenelements (26a, 26b) angeordnet zu sein, um das Küchenelement (26a, 26b) freizugeben, oder auf dem Küchenelement (26a, 26b) abgelegt zu sein, um genutzt zu werden, und
im Fahrbetrieb des Wohnmobils (1, 2) oder Wohnwagens auf dem Küchenelement (26a, 26b) abgelegt zu sein, um die Höhe der Wohnkabine (2) zu verringern.

10. Wohnmobil (1, 2) oder Wohnwagen nach Anspruch 9
mit wenigstens einem Sitzelement (27), welches ausgebildet ist, im Standbetrieb des Wohnmobils (1, 2) oder Wohnwagens zum Sitzen genutzt zu werden,
wobei das Sitzelement (27) ferner ausgebildet ist, um im Standbetrieb des Wohnmobils (1, 2) oder Wohnwagens als Aufstiegselement zum Erreichen der ersten Matratze (29a) genutzt zu werden, wenn die erste Matratze (29a) entlang der vertikalen Achse (Z) auf dem Küchenelement (26a, 26b) abgelegt ist.

11. Wohnmobil (1, 2) oder Wohnwagen nach einem der vorangehenden Ansprüche
mit wenigstens einem Paar einander entlang der Querachse (Y) gegenüberliegender Sitzelemente (27), vorzugsweise Sitzbänke (27), und einem dazwischen angeordneten entlang der vertikalen Achse (Z) höhenverstellbaren Tischelement (28),
wobei das höhenverstellbare Tischelement (28) ausgebildet ist,
im Standbetrieb des Wohnmobils (1, 2) oder Wohnwagens entlang der vertikalen Achse (Z) gegenüber den Sitzelementen (27) angehoben zu sein, um die Sitzelemente (27) zum Sitzen an dem höhenverstellbaren Tischelement (28) zu nutzen, und
im Fahrbetrieb des Wohnmobils (1, 2) oder Wohnwagens entlang der vertikalen Achse (Z) gegenüber den Sitzelementen (27) auf deren Höhe abgesenkt zu sein, um die Sitzelemente (27) und das höhenverstellbare Tischelement (28) als Liegefläche zu nutzen.

12. Wohnmobil (1, 2) oder Wohnwagen nach einem der vorangehenden Ansprüche
mit wenigstens einer Tür (20b) zum Schließen und Freigeben einer Türöffnung (20a) einer Außenwand (20) der Wohnkabine (2) und
mit einem Eingangsbereich (25) im Innenraum der Wohnkabine (2), welcher unmittelbar vor der Tür (20b) angeordnet ist,
wobei der Eingangsbereich (25) eine Duschvorrichtung und einen Wasserablauf aufweist, so dass der Eingangsbereich (25) ausgebildet ist, auch als Duschbereich (25) genutzt zu werden.

13. Wohnmobil (1, 2) nach einem der vorangehenden Ansprüche
mit einem, vorzugsweise geländegängigen, Trägerfahrzeug (1), welches die Wohnkabine (2) als Aufbau (2) festverbunden, vorzugsweise mittels einer 3-Punkt-Lagerung, oder trennbar aufnimmt.

14. Wohnmobil (1, 2) nach Anspruch 13,
wobei ein Fahrersitz (18) und/oder ein Beifahrersitz (18) des Trägerfahrzeugs (1) ausgebildet ist/sind, im Standbetrieb des Wohnmobils (1, 2) entlang der Längsachse (X) nach vorne in eine Fahrerkabine (13) des Trägerfahrzeugs (1) bewegt, vorzugsweise geklappt, zu werden,
ferner mit wenigstens einem ersten Küchenelement (26a), welches in der Wohnkabine (2) angeordnet und ausgebildet ist,
im Standbetrieb des Wohnmobils (1, 2) in den Bereich der Fahrerkabine (13) des Trägerfahrzeugs (1), welcher von den dort wegbewegten, vorzugsweise weggeklappten, Fahrersitz (18) und/oder Beifahrersitz (18) des Trägerfahrzeugs (1) freigegeben wird, bewegt, vorzugsweise um die vertikale Achse (Z) geschwenkt zu sein, um das erste Küchenelement (26a) zu nutzen, und
im Fahrbetrieb des Wohnmobils (1, 2) in die Wohnkabine (2) bewegt, geschwenkt, zu sein, so dass der Fahrersitz (18) und/oder der Beifahrersitz (18) des Trägerfahrzeugs (1) innerhalb der Fahrerkabine (13) des Trägerfahrzeugs (1) zur Wohnkabine (2) hinbewegt, vorzugsweise geklappt, und genutzt werden können.

15. Wohnmobil (1, 2) nach Anspruch 13 oder 14,
wobei die Wohnkabine (2) und eine Fahrerkabine (13) des Trägerfahrzeugs (1) miteinander verbunden sind, so dass eine Person zwischen der Wohnkabine (2) und der Fahrerkabine (13) des Trägerfahrzeugs (1), vorzugsweise nach Bewegen, vorzugsweise Schwenken, des ersten Küchenelements (26a) in die Wohnkabine (2) und nach hinten bewegen, vorzugsweise klappen, des Fahrersitzes (18) und/oder des Beifahrersitzes (18) des Trägerfahrzeugs (1), hin und her wechseln kann.
